# EUROPÄISCHE PATENTANMELDUNG

(11) **EP 1 612 664 A1**
(43) Veröffentlichungstag der Anmeldung: **04.01.2006**
(21) Anmeldenummer: 04015669.7
(22) Anmeldetag: 02.07.2004
(51) Int. Cl.: G06F 9/445, H04L 29/08

(54) **Vorrichtung und Verfahren zum Beschleunigen von Applikationszugriffszeiten**

(71) Anmelder: SIEMENS AKTIENGESELLSCHAFT, 80333 München (DE)
(72) Erfinder: Findling, Axel, 80634 München (DE); Graf, Manfred, 82131 Gauting (DE); Sessler, Jürgen, 85586 Poing (DE)

(57) **Zusammenfassung**

Die Erfindung betrifft eine Vorrichtung und ein Verfahren zum Beschleunigen von Applikationszugriffszeiten mit einer Applikations-Verarbeitungseinheit (1), einer Eingabeeinheit (2), einer Arbeitsablauf-Analyseeinheit (3) zum Analysieren eines Arbeitsablaufs von zumindest der Applikations-Verarbeitungseinheit (1) oder der Eingabeeinheit (2), einer Preloading-Matrix (PM) zum Festlegen einer Vorab-Ladevorschrift für zumindest eine Aktiv-Applikation und zumindest eine zugehörige Prognose-Applikation, und eine Preloading-Einheit (4) zum Laden von Prognose-Applikationen in die Applikations-Verarbeitungseinheit (1) in Abhängigkeit von der Preloading-Matrix (PM), wenn eine Aktiv-Applikation gestartet wird, wobei die Arbeitsablauf-Analyseeinheit die Ladevorschrift der Preloading-Matrix in Abhängigkeit von einem Analyseergebnis erzeugt oder aktualisiert.

## Beschreibung

Die vorliegende Erfindung bezieht sich auf eine Vorrichtung und ein Verfahren zum Beschleunigen von Applikationszugriffszeiten und insbesondere auf eine Vorrichtung und ein Verfahren zum Beschleunigen von Applikationszugriffszeiten in mobilen Telekommunikationsendgeräten.

Auf Grund von Beschränkungen bzw. Restriktionen im Leistungsvermögen bzw. der Performance sowie der Hardwareausstattung insbesondere von mobilen Endgeräten wie beispielsweise mobilen Telekommunikations-Endgeräten (Handys, Smartphones), PDAs (Personal Digital Assistant) usw. wird oftmals in einem ersten Schritt eines Bootvorganges nur ein minimales Basissystem bestehend aus einer Vielzahl von Grund-Applikationen geladen, um einen möglichst schnellen Bereitschaftszustand des mobilen Endgerätes zu erreichen und die belegten Ressourcen wie beispielsweise einen Speicher, eine Prozessoreinheit (CPU, Central Processing Unit), einen Treiber usw. zu schonen. Daher werden eine Vielzahl von Softwaremodulen bzw. Applikationen erst bei Bedarf bzw. "on-demand" geladen, was wiederum einen schnellen Zugriff auf die jeweiligen Applikationen verhindert.

Um demzufolge Applikationszugriffszeiten zu beschleunigen, wurden beispielsweise Applikationen oder Teile hiervon bereits bei einem Bootvorgang in den Arbeitsspeicher geladen und dort so lange gespeichert, um im Falle eines späteren Aktivierens der Applikation einen beschleunigten Zugriff auf diese Applikationen zu ermöglichen. Nachteilig ist hierbei jedoch, dass große Teile des Arbeitsspeichers während einer Sitzung für diesen Zweck reserviert werden. Insbesondere in mobilen Endgeräten wie beispielsweise Handys, Smartphones oder PDAs stehen jedoch nur begrenzte Ressourcen zur Verfügung, weshalb dieser Lösungsansatz ungeeignet ist.

Ferner existieren Systeme, bei denen Applikationen bzw. Softwaremodule nur dann geladen werden, falls sie direkt gestartet werden. Dies bringt jedoch keine Zeitersparnis und kann als "Normalfall" bezeichnet werden.

Ferner können in sogenannten priorisierten Systemen alle "wichtigen" Applikationen bzw. Softwaremodule zuerst geladen werden, während die als "weniger wichtig" eingestuften Softwaremodule bzw. Applikationen zu einem späteren Zeitpunkt nachgeladen werden. Nachteilig ist hierbei die fehlende Ressourcenersparnis.

Weiterhin können beispielsweise beim Betriebssystem "Windows®" in einem "Autostart"-Ordner hinterlegte Applikationen bzw. Softwaremodule nach dem Starten des Betriebssystems automatisch geladen und gestartet werden, wodurch sie jederzeit als Hintergrundprozesse zur Verfügung stehen. Nachteilig ist hierbei wiederum eine intensive Belegung von Arbeitsspeicher und/oder CPU-Ressourcen.

Der Erfindung liegt daher die Aufgabe zu Grunde eine Vorrichtung und ein Verfahren zum Beschleunigen von Applikationszugriffszeiten zu schaffen, wobei auch bei stark begrenzten Ressourcen eine Zugriffsschnelligkeit verbessert ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 12 gelöst.

Vorzugsweise besitzt die Vorrichtung eine Applikations-Verarbeitungseinheit zum Verarbeiten von Applikationen, eine Eingabeeinheit zum Erfassen von Benutzereingaben, eine Arbeitsablauf-Analyseeinheit zum Analysieren eines Arbeitsablaufs bzw. "Workflows" von zumindest der Applikations-Verarbeitungseinheit oder der Eingabeeinheit, eine Preloading-Matrix zum Festlegen einer Vorab-Ladevorschrift für zumindest eine Prognose-Applikation und zumindest eine zugehörige Aktiv-Applikation, und eine Preloading-Einheit zum Laden von Prognose-Applikationen in die Applikations-Verarbeitungseinheit in Abhängigkeit von der Preloading-Matrix, wenn eine Aktiv-Applikation gestartet wird, wobei die Arbeitsablauf-Analyseeinheit die Ladevorschrift der Preloading-Matrix in Abhängigkeit von einem Analyseergebnis erzeugt oder aktualisiert. Auf diese Weise können insbesondere mobile Endgeräte mit ihren stark begrenzten Ressourcen, wie beispielsweise einem sehr kleinen Arbeitsspeicher, eine Zugriffsschnelligkeit für wahrscheinlich nachfolgende Applikationen steigern.

Vorzugsweise kann ferner ein Benutzerprofil zum Festlegen eines wahrscheinlichen Benutzerverhaltens vorgesehen werden, wobei die Arbeitsablauf-Analyseeinheit ferner das Benutzerprofil in Abhängigkeit von dem Analyseergebnis erzeugt oder aktualisiert und das Benutzerprofil ferner die Preloading-Matrix aktualisiert.

Das Benutzerprofil kann hierbei in Abhängigkeit von einer zeitlichen Bedingung, wie beispielsweise einer Tageszeit oder einem Wochentag, oder in Abhängigkeit von einer Umgebungssituation, wie beispielsweise den zur Verfügung stehenden Verbindungsschnittstellen, aktualisiert werden.

Vorzugsweise werden die von der Preloading-Matrix vorgegebenen Prognose-Applikationen im Hintergrund in die Arbeitsspeichereinheit geladen, wodurch ein Benutzer nicht von den durchgeführten Prozessen irritiert wird. Die Applikationen stellen vorzugsweise Anwendungsprogramme und/oder Dienstanwendungen dar, wobei insbesondere bei einem Einsatz in Telekommunikationsendgeräten ein Aufruf eines Dienstes bzw. der Start einer Dienstanwendung mit einer Vielzahl von weiteren Applikationen kombiniert bzw. verknüpft werden kann.

In der Arbeitsablauf-Analyseeinheit wird vorzugsweise eine Häufigkeit, eine Zeitdauer, ein Zeitpunkt und/oder ein Kontext für einen Applikationsstart bzw. den Aufruf einer Applikation analysiert und als Analyseergebnis ausgegeben, wodurch sich eine statistische Betrachtung realisieren lässt.

Ferner können bereits geladene oder teilgeladene Prognose-Applikationen zum Freimachen der belegten Ressourcen wieder freigegeben werden, wenn eine zugehörige bereits gestartete Aktiv-Applikation abgebrochen wird. Die Effizienz des Systems wird dadurch wesentlich gesteigert.

Vorzugsweise weist die Preloading-Matrix eine Prioritätsliste für die Reihenfolge der zu ladenden Preloading-Applikationen auf, wodurch die Preloading-Matrix bzw. die darin befindlichen Vorab-Ladevorschriften sehr einfach neu organisiert werden können.

Ferner kann die Arbeitsablauf-Analyseeinheit durch ein gewichtetes Analyseergebnis die Ladevorschrift der Preloading-Matrix aktualisieren, wodurch das von der Arbeitsablauf-Analyseeinheit ermittelte Arbeitsablauf-Verhalten zusätzlich bewertet werden kann.

Darüber hinaus kann das Benutzerprofil und/oder die Preloading-Matrix auch unmittelbar über die Eingabeeinheit von einem Benutzer erzeugt oder aktualisiert, ganz oder teilweise gelöscht, und/oder initialisiert werden, wodurch der vorzugsweise automatische Vorgang zum Erstellen der Preloading-Matrix auch zumindest teilweise manuell durchgeführt werden kann.

Hinsichtlich des Verfahrens werden zunächst eine Arbeitsablauf-Analyse zum Analysieren eines Arbeitsablaufs von zumindest einer Applikations-Verarbeitungseinheit oder einer Eingabeeinheit durchgeführt, anschließend eine Preloading-Matrix mit einer Vorab-Ladevorschrift für zumindest eine Aktiv-Applikation und zumindest eine zugehörige Preloading-Applikation in Abhängigkeit von einem Analyseergebnis erzeugt oder aktualisiert und abschließend ein Preloading zum Laden von Prognose-Applikationen in die Applikationsverarbeitungseinheit in Abhängigkeit von der Preloading-Matrix durchgeführt, wenn eine Aktiv-Applikation gestartet wird. Die Applikationszugriffszeiten können hierbei auch bei minimalen Ressourcen, wie sie insbesondere in mobilen Endgeräten vorliegen, stark beschleunigt werden.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 eine vereinfachte Blockdarstellung einer Vorrichtung zum Beschleunigen von Applikationszugriffszeiten;
Figur 2 eine vereinfachte Blockdarstellung zur Veranschaulichung einer Vorab-Ladevorschrift in einer Preloading-Matrix; und
Figur 3 eine vereinfachte Darstellung eines Flussdiagramms zur Veranschaulichung eines Verfahrens zum Beschleunigen von Applikationszugriffszeiten.

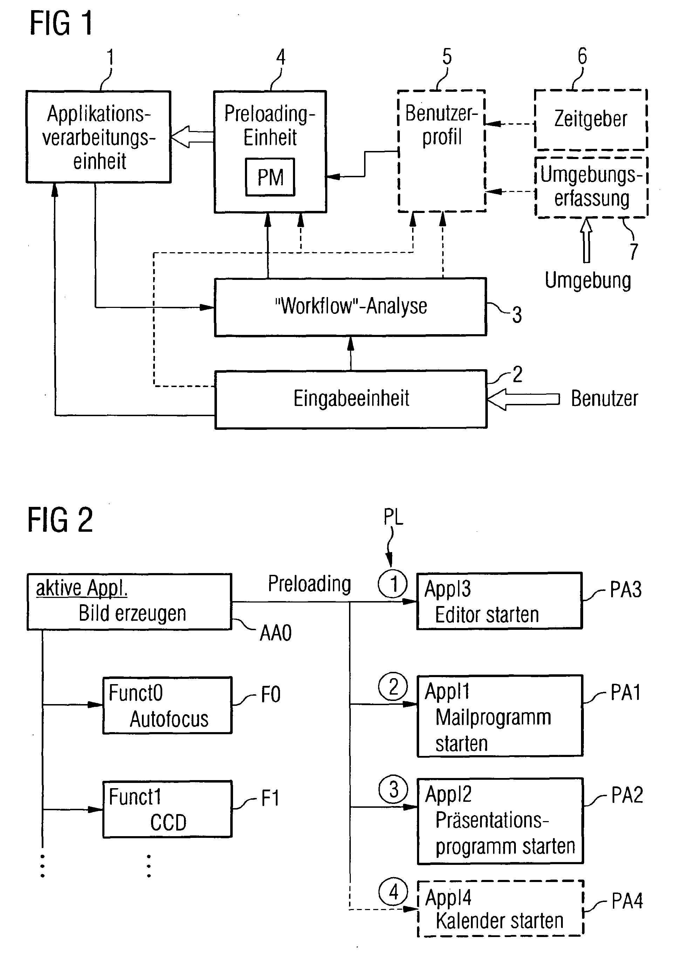

Figur 1 zeigt eine vereinfachte Blockdarstellung zur Veranschaulichung einer Vorrichtung zum Beschleunigen von Applikationszugriffszeiten gemäß der vorliegenden Erfindung, wie sie insbesondere in einem mobilen Endgerät mit stark beschränkten Ressourcen wie beispielsweise einem Arbeitsspeicher, einer Prozessoreinheit (CPU), einem Treiber usw. verwendet wird. Derartige mobile Endgeräte sind beispielsweise mobile Telekommunikationsendgeräte wie z.B. Handys, Smartphones oder sogenannte PDAs (Personal Digital Assistant).

Unter dem Begriff Applikation und insbesondere unter den Begriffen Aktiv-Applikation und Prognose-Applikation werden nachfolgend Softwaremodule bzw. Anwendungsprogramme und/oder Dienstanwendungen verstanden, die zunächst vollkommen unabhängig voneinander ladbar und ausführbar sind. Insbesondere sind derartige Applikationen nicht zu verwechseln mit sogenannten Funktionsprogrammen, die einer jeweiligen Applikation direkt zugeordnet sind und sozusagen die Funktion der Applikation erst grundsätzlich ermöglichen.

Anhand des nachfolgenden Beispiels seien diese grundsätzlichen Unterschiede kurz erläutert. Gemäß Figur 2 sind fünf Applikationen bzw. Softwaremodule AA0 und PA1 bis PA4 dargestellt, welche zunächst eigenständige und voneinander unabhängige Programme darstellen. Dies kann beispielsweise ein Bilderzeugungsprogramm AA0 zum Erzeugen eines Bildes bzw. Fotos sein, ein Editor PA3 für beispielsweise Texteingaben, ein Mailprogramm PA1, ein Präsentationsprogramm PA2 und ein Kalender PA4. Derartige Programme können von einer Vielzahl von (unterschiedlichen) Herstellern zur Verfügung gestellt werden und existieren als eigenständige abgeschlossene Programmeinheiten, die zunächst keinerlei Zusammenhang zueinander aufweisen.

Demgegenüber besitzt jedes dieser Programme eine Vielzahl von Funktionsprogrammen, die zur Ausführung des Softwaremoduls bzw. der Applikation notwendig sind und demzufolge in direktem Zusammenhang mit einer jeweiligen Applikation stehen. Beispielsweise weist das Bilderzeugungsprogramm AA0 die Funktionsprogramme F0 zur Realisierung eines Autofokus in einer Kameraeinheit und das Funktionsprogramm F1 zur Ansteuerung einer Bildsensoreinheit bzw. CCD (Charge Coupled Device) auf, welche für die Applikation AA0 zum Erzeugen eines Bildes beispielsweise mittels einer Kamera unmittelbar notwendig sind.

Eine Aktiv-Applikation stellt ferner eine bereits geladene und gerade gestartete Applikation dar. Eine Prognose-Applikation stellt hingegen eine prognositzierte bzw. vorhergesagte Applikation dar, die in Bezug auf die Aktiv-Applikation als "wahrscheinlich" nächste auszuführende Applikation betrachtet wird und folglich vorab zu laden ist (, jedoch noch nicht gestartet wird).

Die vorliegende Erfindung bezieht sich demzufolge ausschließlich auf das Beschleunigen von Applikationszugriffzeiten von zunächst vollständig unabhängigen Applikationen bzw. Softwaremodulen, welches durch intelligentes Preloading unter Berücksichtigung einer jeweiligen Ressourcenauslastung und wahrscheinlicher Arbeitsabläufe oder einem wahrscheinlichen Benutzerverhalten ermöglicht wird.

Gemäß Figur 1 wird zum Verarbeiten derartiger Applikationen eine Applikations-Verarbeitungseinheit 1 vorgesehen. Eine derartige Applikations-Verarbeitungseinheit weist beispielsweise eine Prozessoreinheit bzw. Datenverarbeitungseinheit und eine Arbeitsspeichereinheit auf, wobei die Datenverarbeitungseinheit die in der Arbeitsspeichereinheit gespeicherten Programme in üblicher Weise abarbeitet. Ferner ist gemäß Figur 1 eine Eingabeeinheit 2 zum Erfassen von Benutzereingaben dargestellt, die beispielsweise eine Tastatur, eine optische und/oder akustische Eingabeeinheit usw. aufweisen kann, mit der ein Benutzer beispielsweise ein Telekommunikationsendgerät bedient. Die Eingabeeinheit steuert hierbei unmittelbar die Applikations-Verarbeitungseinheit 1 an, wodurch beispielsweise auszuführende Applikationen vom Benutzer ausgewählt und gestartet werden können.

Darüber hinaus besitzt die Vorrichtung zum Beschleunigen von Applikationszugriffszeiten eine Arbeitsablauf- bzw. "Workflow"-Analyseeinheit 3 zum Analysieren eines Arbeitsablaufs bzw. "Workflows" von zumindest der Applikations-Verarbeitungseinheit 1 oder der Eingabeeinheit 2. Beispielsweise wird mittels dieser Arbeitsablauf-Analyseeinheit 3 eine Benutzereingabe protokolliert und/oder ein Arbeitsverhalten der Applikations-Verarbeitungseinheit 1 aufgezeichnet, analysiert und ein Analyseergebnis ausgegeben. Genauer gesagt kann die Arbeitsablauf-Analyseeinheit 3 beispielsweise eine Häufigkeit, eine Zeitdauer, einen Zeitpunkt, einen Kontext usw. für einen jeweiligen Applikationsstart erfassen, analysieren und daraus ein Analyseergebnis erzeugen. Unter Verwendung dieses Analyseergebnisses wird nunmehr eine sogenannte Preloading-Matrix PM zum Festlegen einer Vorab-Ladevorschift für zumindest eine Aktiv-Applikation und zumindest eine zugehörige Preloading-Applikation erzeugt (oder eine bestehende aktualisiert), wobei eine Preloading-Einheit 4 in Abhängigkeit von dieser Preloading-Matrix PM die darin festgelegten Prognose-Applikationen in die Applikations-Verarbeitungseinheit 1 vorab lädt, wenn eine ebenfalls in der Preloading-Matrix PM bzw. Vorab-Ladevorschrift abgelegte zugehörige Aktiv-Applikation gestartet wird.

Zur Verdeutlichung der Erfindung wird wiederum ein konkretes Beispiel anhand der in Figur 2 dargestellten Applikationen beschrieben, wobei im Wesentlichen ein Teil-Inhalt bzw. eine einzige Vorab-Ladevorschrift der Preloading-Matrix PM dargestellt ist. Die Preloading-Matrix PM weist üblicherweise eine Vielzahl von derartigen Ladevorschriften auf. Wenn beispielsweise die Arbeitsablauf-Analyseeinheit 3 unter Beobachtung der Applikations-Verarbeitungseinheit 1 und/oder der Eingabeeinheit 2 feststellt, dass in einer Vielzahl von Fällen, bei denen ein Bilderzeugungsprogramm AA0 aufgerufen bzw. gestartet wurde, in den meisten Fällen anschließend ein Editor PA3, anschließend ein Mailprogramm PA1 und abschließend ein Präsentationsprogramm PA2 aufgerufen bzw. gestartet wird, so erstellt diese Arbeitsablauf-Analyseeinheit 3 für die Aktiv-Applikation AA0 eine Vorab-Ladevorschrift gemäß Figur 2 in Abhängigkeit von beispielsweise einer Aufrufhäufigkeit des jeweiligen Programms. Der Aktiv-Applikation AA0 bzw. dem Bilderzeugungsprogramm wird demzufolge die Vorab-Ladevorschrift zum Laden der Prognose-Applikation PA3 zum Editieren eines Textes, der Prognose-Applikation PA1 zum Starten des Mailprogramms und der Prognose-Applikation 2 zum Starten des Präsentationsprogramms zugeordnet wird. Eine Prioritätsliste PL legt hierbei die Reihenfolge der zu ladenden Prognose-Applikationen PAx fest. Zur Abgrenzung sind demgegenüber noch die Funktionsprogramme F0 und F1 in Figur dargestellt, die unmittelbar einer jeweiligen Applikation beispielsweise der Aktiv-Applikation AA0 zugeordnet sind und somit zur Ausführung des Programms geladen werden müssen.

Eine Aktiv-Applikation stellt demzufolge eine im Arbeitsspeicher bzw. der Applikations-Verarbeitungseinheit bereits geladene und bereits gestartete bzw. aktive Applikation dar. Demgegenüber stellt eine Prognose-Applikation eine mit gewisser Wahrscheinlichkeit nach der Aktiv-Applikation zu startende prognostizierte Applikation dar, welche zur Beschleunigung einer Applikationszugriffszeit von der Preloading-Einheit 4 vorab in die Applikations-Verarbeitungseinheit 1 geladen wird. Falls dann sozusagen unter Berücksichtigung der Arbeitsablauf-Historie tatsächlich diese Prognose-Applikation aufgerufen wird, ergeben sich keinerlei Verzögerungen, da sich die Prognose-Applikation bereits im Arbeitsspeicher befindet und somit sofort gestartet werden kann.

Mit dem Starten der Prognose-Applikation wird nunmehr diese Prognose-Applikation PA3, z.B. Editor zur Texteingabe, zu einer Aktiv-Applikation, wobei wiederum in Abhängigkeit von einer (nicht dargestellten) Vorab-Ladevorschrift der Preloading-Matrix PM die (neuen) Prognose-Applikationen zu dieser neuen Aktiv-Applikation (Editor) ausgewählt werden und ein entsprechender Ladevorgang durchgeführt wird. Auf diese Weise kann im Wesentlichen unter Verwendung von früheren bzw. bereits vergangenen Arbeitsabläufen eine Vorhersage für zukünftige Arbeitsabläufe getroffen werden, welche über die Ladevorschrift bzw. die Preloading-Matrix PM eine wesentliche Beschleunigung von Applikationszugriffszeiten auch bei stark begrenzten Ressourcen, wie sie insbesondere in mobilen Endgeräten vorliegen, ermöglicht.

Bei einer derartigen Arbeitsablauf-Analyse können folglich auch zusätzliche oder weitere Prognose-Applikationen wie beispielsweise eine Prognose-Applikation PA4 der Vorab-Ladevorschrift bzw. der Preloading-Matrix PM hinzugefügt werden, wobei z.B. ein Kalenderprogramm ausgeführt wird.

Zur Verbesserung einer Bedienbarkeit werden die in der Preloading-Matrix PM bzw. der Ladvorschrift vorgegebenen Prognose-Applikationen PA1 bis PA4 vorzugsweise im Hintergrund in die Arbeitsspeichereinheit der Applikations-Verarbeitungseinheit geladen. Grundsätzlich könnten sie jedoch auch für den Benutzer sichtbar nach dem Start einer Aktiv-Applikation geladen werden.

In gleicher Weise, wie eine Prognose-Applikation PA4 der Ladevorschrift der Preloading-Matrix PM hinzugefügt werden kann, können auch die den jeweiligen Prognose-Applikationen PA1 bis PA4 zugeordneten Prioritäten der Prioritätsliste PL geändert bzw. in Abhängigkeit von der Arbeitsablauf-Analyse aktualisiert werden. Wenn sich demzufolge über einen größeren Zeitraum ein Arbeitsablauf verändert und folglich nach dem Bilderzeugen gemäß der Aktiv-Applikation AA0 zunächst öfter die Prognose-Applikation PA2 (Präsentationsprogramm) ausgeführt wird, so kann ihre bisherige Priorität 3 auf eine Priorität 1 verändert werden, während die bisherige Priorität 1 der Prognose-Applikation PA3 (Editor zur Texteingabe) auf eine geringere Priorität, z.B. 3, verändert wird. Auf diese Weise erhält man eine dynamische Aktualisierung der Ladevorschriften bzw. der Preloading-Matrix PM in Abhängigkeit von jeweils geltenden Arbeitsabläufen.

Zur weiteren Optimierung bzw. zum weiteren Beschleunigen der Applikationszugriffszeiten kann darüber hinaus ein Benutzerprofil 5 zum Festlegen eines wahrscheinlichen Benutzerverhaltens festgelegt werden, wobei die Arbeitsablauf-Analyseeinheit 3 ferner das Benutzerprofil in Abhängigkeit von dem Analyseergebnis und das Benutzerprofil 5 ferner die Preloading-Matrix PM aktualisiert. Auf diese Weise kann nicht nur ein im Wesentlichen geräteabhängiges Arbeitsablauf-Verhalten, sondern darüber hinaus ein spezielles Benutzerverhalten von einem jeweiligen Benutzer berücksichtigt werden.

Zur weiteren Spezifizierung des Benutzerprofils 5 kann beispielsweise eine Zeitgebereinheit 6 vorgesehen sein, die das Benutzerprofil 5 in Abhängigkeit von einer zeitlichen Bedingung ändert bzw. aktualisiert. Auf diese Weise können beispielsweise in Abhängigkeit von einer Tageszeit, einem Wochentag, einem Monat usw. spezifische Benutzerverhalten bzw. Gewohnheiten berücksichtigt und zur Anpassung der Preloading-Matrix PM verwendet werden. Üblicherweise wird sich das Benutzerverhalten am Wochenende von einem Benutzerverhalten an Arbeitstagen unterscheiden. In gleicher Weise unterscheidet sich auf ein Benutzerverhalten während eines Arbeitstages vom Benutzerverhalten am Feierabend oder in der Nacht.

Neben dieser Zeitgebereinheit 6 zur Aktualisierung des Benutzerprofils 5 und darüber hinaus der Preloading-Matrix PM kann ferner eine Umgebungs-Erfassungseinheit 7 vorgesehen sein, die eine aktuelle Umgebungssituation eines Benutzers bzw. des Endgeräts erfasst. Eine derartige Umgebungssituation kann beispielsweise die Erfassung eines jeweiligen Ortes darstellen, wobei das Benutzerprofil in Abhängigkeit vom Aufenthaltsorts des Benutzers bzw. des Endgeräts, wie beispielsweise einem Büro, einer Privatwohnung oder dem Arbeitsweg wiederum spezifische Verhaltensweisen prognostiziert werden, welche dann spezifische Ladevorschriften bzw. Prognose-Applikationen zur Folge haben. Eine derartige Umgebungserfassung kann beispielsweise durch Auswertung der zur Verfügung stehenden Übertragungs- bzw. Verbindungsschnittstellen durchgeführt werden, wobei insbesondere bei einem mobilen Telekommunikationsendgerät die unterschiedlichen Verbindungsschnittstellen wie beispielsweise Bluetooth, WLAN, GSM, GPRS, UMTS usw. analysiert werden und daraus ein Rückschluss auf einen jeweiligen Aufenthaltsort bzw. auf ein jeweiliges Benutzerverhalten prognostiziert wird. Auf diese Weise kann eine "Trefferwahrscheinlichkeit" für die prognostizierten Applikationen weiter verbessert werden, wodurch sich die Applikationszugriffszeiten weiter verkürzen.

Wenn eine bereits gestartete Aktiv-Applikation AA0 abgebrochen wird, so kann die Preloading-Einheit 4 zum Freimachen von Ressourcen insbesondere des Arbeitsspeichers bereits geladene oder teilgeladene Preloading-Applikationen PA1 bis PA4 wieder freigeben. Auf diese Weise werden die in mobilen Endgeräten nur begrenzt zur Verfügung stehenden Ressourcen außerordentlich schonend genutzt. Zum Aktualisieren der Ladevorschrift in der Preloading-Matrix PM kann insbesondere das Analyseergebnis der Arbeitsablauf-Analyseeinheit 3 gewichtet werden, wodurch eine Bewertung der unterschiedlichen Erfassungsparameter ermöglicht ist. Diese Gewichtung ist grundsätzlich auch für die zeitlichen Bedingungen der Zeitgebereinheit 6 sowie die erfasste Umgebungssituation der Umgebungserfassungseinheit 7 möglich.

Darüber hinaus kann optional die Möglichkeit bestehen, das Benutzerprofil 5 und/oder die Ladevorschrift der Preloading-Matrix PM unmittelbar von einem Benutzer über die Eingabeeinheit 2 zu erzeugen oder aktualisieren. Insbesondere ist hierbei ein vollständiges oder teilweises Löschen und/oder ein Initialisieren der Ladevorschriften bzw. Benutzerprofile möglich. Auf diese Weise kann neben der dynamischen Aktualisierung von Benutzerprofil 5 und Preloading-Matrix PM auch eine manuelle Änderung durchgeführt werden, wodurch ein Lernprozess bzw. eine Zeitdauer für eine Arbeitsablauf-Analyse wesentlich verkürzt werden kann.

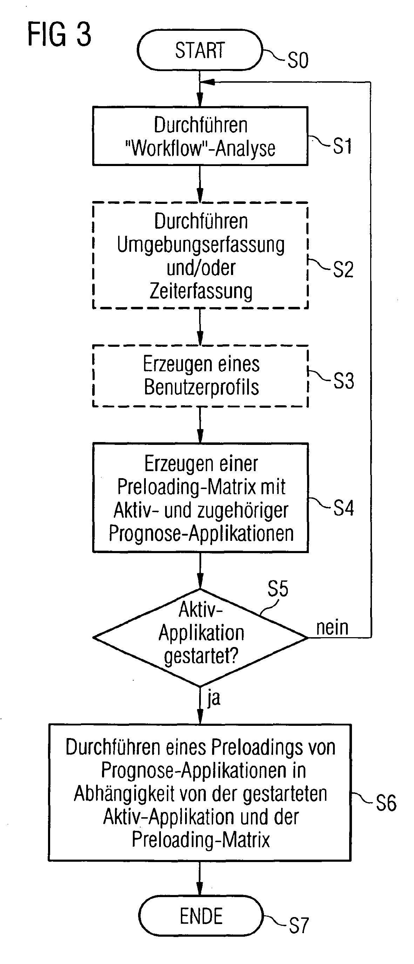

Figur 3 zeigt eine vereinfachte Darstellung eines Flussdiagramms zur Veranschaulichung eines Verfahrens zum Beschleunigen von Applikationszugriffszeiten, wie es insbesondere in einem mobilen Endgerät wie z.B. einem Handy, Smartphone oder PDA durchgeführt wird.

Nach einem Start im Schritt S0 wird zunächst eine Arbeitsablauf-Analyse zum Analysieren eines Arbeitsablaufs von zumindest einer Applikations-Verarbeitungseinheit 1 oder einer Eingabeeinheit 2 in einem Schritt S1 durchgeführt.

Optional kann in einem Schritt S2 ferner eine Umgebungserfassung mittels der Umgebungserfassungseinheit 7 und/oder eine Zeiterfassung mittels der Zeitgebereinheit 6 durchgeführt werden, um beispielsweise eine Tageszeit, einen Wochentag usw. oder eine zur Verfügung stehende Verbindungsschnittstelle bzw. Telekommunikationsschnittstelle zu berücksichtigen. Hinsichtlich der Details für eine derartige Erfassung wird auf die detaillierte Beschreibung gemäß Figur 1 verwiesen.

In einem Schritt S3 kann optional ferner ein Benutzerprofil 5 zum Festlegen eines wahrscheinlichen Benutzerverhaltens erzeugt oder aktualisiert werden, wobei das Benutzerprofil in Abhängigkeit von dem Analyseergebnis in Schritt S1 erzeugt oder aktualisiert wird. Ferner kann das Benutzerprofil in Abhängigkeit von der in Schritt S2 durchgeführten Umgebungserfassung und/oder Zeiterfassung erzeugt oder aktualisiert werden. Wiederum sei auf die Details in Figur 1 verwiesen.

In einem Schritt S4 wird schließlich die Preloading-Matrix mit ihren Aktiv-Applikationen und zugehörigen Prognose-Applikationen erzeugt oder aktualisiert, wobei zumindest das Analyseergebnis der Arbeitsablauf-Analyse gemäß Schritt S1 berücksichtigt wird. Ferner kann jedoch auch das in Schritt S3 erzeugte Benutzerprofil berücksichtigt werden, in dem sich wiederum die Umgebungserfassung und/oder die Zeiterfassung widerspiegeln können.

In einem Schritt S5 wird nunmehr überprüft, ob eine Aktiv-Applikation gestartet wurde, um dann die in der Preloading-Matrix PM festgelegten Prognose-Applikationen vorab in den Arbeitsspeicher der Applikations-Verarbeitungseinheit 1 zu laden. Solange dies nicht der Fall ist, wird weiterhin zu Schritt 1 zurückverzweigt und die Arbeitsablauf-Analyse weiterhin durchgeführt.

Sobald jedoch gemäß Schritt S5 eine Aktiv-Applikation gestartet wird, erfolgt in Schritt S6 ein Durchführen eines Preloadings bzw. eines Vorab-Ladens von Prognose-Applikationen in Abhängigkeit von der jeweils gestarteten Aktiv-Applikation und unter Berücksichtigung der aktuellen Ladevorschrift der Preloading-Matrix. Das Verfahren endet in einem Schritt S7.

Ferner können weitere in Figur 3 nicht dargestellte Verfahrensschritte zum Freigeben von bereits geladenen oder teilgeladenen Prognose-Applikationen zum Freimachen von Ressourcen durchgeführt werden, wenn eine bereits gestartete zugehörige Aktiv-Applikation abgebrochen wird.

Hinsichtlich der weiteren Einzelheiten der verschiedenen Verfahrensschritte wird insbesondere auf die detaillierte Beschreibung zur Figur 1 explizit verwiesen.

Auf diese Weise kann auch in mobilen Endgeräten mit ihren sehr begrenzten Ressourcen eine weitere Beschleunigung von Applikationszugriffszeiten durchgeführt werden, wobei unter Verwendung von bisherigen bzw. vergangenen Arbeitsabläufen und einem bisherigen bzw. vergangenen Benutzerverhalten auf ein zukünftiges Benutzerverhalten bzw. auf einen zukünftigen Arbeitsablauf geschlossen wird.

Die Erfindung wurde vorstehend anhand eines mobilen Endgeräts wie beispielsweise eines mobilen Telekommunikations-Endgeräts beschrieben. Sie ist jedoch nicht darauf beschränkt und umfasst in gleicher Weise alle weiteren Datenverarbeitungseinheiten, mit denen eine Vielzahl von Applikationen ausgeführt werden.

Ferner wurde die Erfindung anhand eines sequentiellen Ladevorgangs bzw. einer sequentiellen Ladevorschrift beschrieben. Sie ist jedoch nicht darauf beschränkt und umfasst in gleicher Weise auch gleichzeitige Ladevorgänge von Prognose-Applikationen.

### Bezugszeichenliste

- 1: Applikations-Verarbeitungseinheit
- 2: Eingabeeinheit
- 3: Arbeitsablauf-Analyseeinheit
- 4: Preloading-Einheit
- 5: Benutzerprofil
- 6: Zeitgebereinheit
- 7: Umgebungserfassungseinheit
- S0-S7: Verfahrensschritte
- AA0: Aktiv-Applikation
- PA1-PA4: Prognose-Applikation
- F0, F1: Funktionsprogramm
- PM: Preloading-Matrix

## Patentansprüche

1. Vorrichtung zum Beschleunigen von Applikationszugriffszeiten mit
einer Applikations-Verarbeitungseinheit (1) zum Verarbeiten von Applikationen; und
einer Eingabeeinheit (2) zum Erfassen von Benutzereingaben,
**gekennzeichnet durch**
eine Arbeitsablauf-Analyseeinheit (3) zum Analysieren eines Arbeitsablaufs von zumindest der Applikations-Verarbeitungseinheit (1) und/oder der Eingabeeinheit (2);
eine Preloading-Matrix (PM) zum Festlegen einer Vorab-Ladevorschrift für zumindest eine Prognose-Applikation (PA1 bis PA4) in Abhängigkeit von zumindest einer Aktiv-Applikation (AA0); und
eine Preloading-Einheit (4) zum Laden der festgelegten Prognose-Applikationen (PA1 bis PA4) in die Applikations-Verarbeitungseinheit (1) in Abhängigkeit von der Preloading-Matrix (PM), wenn eine Aktiv-Applikation (AA0) gestartet wird,
wobei die Arbeitsablauf-Analyseeinheit (3) die Ladevorschrift der Preloading-Matrix (PM) in Abhängigkeit von einem Analyseergebnis erzeugt oder aktualisiert.

2. Vorrichtung nach Patentanspruch 1,
**gekennzeichnet durch**
ein Benutzerprofil (5) zum Festlegen eines wahrscheinlichen Benutzerverhaltens, wobei die Arbeitsablauf-Analyseeinheit (3) ferner das Benutzerprofil (5) in Abhängigkeit von dem Analyseergebnis erzeugt oder aktualisiert und das Benutzerprofil (5) ferner die Preloading-Matrix (PM) aktualisiert.

3. Vorrichtung nach Patentanspruch 2,
**gekennzeichnet durch**
eine Zeitgebereinheit (6), die das Benutzerprofil (5) in Abhängigkeit von einer zeitlichen Bedingung, insbesondere von einer Tageszeit und/oder einem Wochentag, aktualisiert.

4. Vorrichtung nach einem der Patentansprüche 2 oder 3,
**gekennzeichnet durch**
eine Umgebungserfassungseinheit (7) zum Erfassen einer aktuellen Umgebungssituation, die das Benutzerprofil in Abhängigkeit von der Umgebungssituation, insbesondere von zur Verfügung stehenden Verbindungsschnittstellen, aktualisiert.

5. Vorrichtung nach einem der Patentansprüche 1 bis 4,
**dadurch gekennzeichnet, dass** die Applikations-Verarbeitungseinheit (1) eine Prozessoreinheit und
eine Arbeitsspeichereinheit aufweist, wobei die Preloading-Einheit (4) die von der Preloading-Matrix (PM) vorgegebenen Prognose-Applikationen (PA1 bis PA4) im Hintergrund in die Arbeitsspeichereinheit lädt.

6. Vorrichtung nach einem der Patentansprüche 1 bis 5,
**dadurch gekennzeichnet, dass** die Applikationen Anwendungsprogramme und/oder Dienstanwendungen darstellen.

7. Vorrichtung nach einem der Patentansprüche 1 bis 6,
**dadurch gekennzeichnet, dass** die Arbeitsablauf-Analyseeinheit (3) eine Häufigkeit, eine Zeitdauer, einen Zeitpunkt und/oder einen Kontext für einen Applikationsstart analysiert.

8. Vorrichtung nach einem der Patentansprüche 1 bis 7,
**dadurch gekennzeichnet, dass** die Preloading-Einheit (4) bereits geladene oder teilgeladene Prognose-Applikationen (PA1 bis PA4) zum Freimachen von Ressourcen wieder freigibt, wenn eine zugehörige bereits gestartete Aktiv-Applikation (AA0) abgebrochen wird.

9. Vorrichtung nach einem der Patentansprüche 1 bis 8,
**dadurch gekennzeichnet, dass** die Preloading-Matrix (PM) eine Prioritätsliste (PL) für die Reihenfolge der zu ladenden Prognose-Applikationen (PA1 bis PA4) aufweist.

10. Vorrichtung nach einem der Patentansprüche 1 bis 9,
**dadurch gekennzeichnet, dass** die Arbeitsablauf-Analyseeinheit (3) durch ein gewichtetes Analyseergebnis die Ladevorschrift der Preloading-Matrix (PM) erzeugt oder aktualisiert.

11. Vorrichtung nach einem der Patentansprüche 1 bis 10,
**dadurch gekennzeichnet, dass** in Abhängigkeit von einem Benutzer die Eingabeeinheit (2) unmittelbar das Benutzerprofil (5) und/oder die Preloading-Matrix (PM) erzeugt oder aktualisiert, vollständig oder teilweise löscht und/oder initialisiert.

12. Verfahren zum Beschleunigen von Applikationszugriffszeiten mit den Schritten:
a) Durchführen einer Arbeitsablauf-Analyse (S1) zum Analysieren eines Arbeitsablaufs von zumindest einer Applikations-Verarbeitungseinheit (1) und/oder einer Eingabeeinheit (2);
b) Erzeugen einer Preloading-Matrix (S4) mit einer Vorab-Ladevorschrift für zumindest eine Aktiv-Applikation (AA0) und zumindest einer zugehörigen Prognose-Applikation (PA1 bis PA4) in Abhängigkeit von einem Analyseergebnis; und
c) Durchführen eines Preloadings (S6) zum Laden von Prognose-Applikationen (PA1 bis PA4) in die Applikations-Verarbeitungseinheit (1) in Abhängigkeit von der Preloading-Matrix (PM), wenn eine Aktiv-Applikation (AA0) gestartet wird (S5).

13. Verfahren nach Patentanspruch 12,
**gekennzeichnet durch**
den weiteren Schritt:
Erzeugen eines Benutzerprofils (S3) zum Festlegen eines wahrscheinlichen Benutzerverhaltens, wobei das Benutzerprofil (5) in Abhängigkeit von dem Analyseergebnis und die Preloading-Matrix (PM) ferner in Abhängigkeit von dem Benutzerprofil (5) erzeugt oder aktualisiert wird.

14. Verfahren nach Patentanspruch 13,
**dadurch gekennzeichnet, dass** das Benutzerprofil (5) in Abhängigkeit von einer zeitlichen Bedingung, insbesondere einer Tageszeit und/oder einem Wochentag, erzeugt oder aktualisiert wird (S2).

15. Verfahren nach Patentanspruch 13 oder 14,
**dadurch gekennzeichnet, dass** das Benutzerprofil (5) in Abhängigkeit von einer Umgebungssituation, insbesondere von zur Verfügung stehenden Verbindungsschnittstellen, erzeugt oder aktualisiert wird (S2).

16. Verfahren nach einem der Patentansprüche 12 bis 15,
**dadurch gekennzeichnet, dass** in Schritt c) die von der Preloading-Matrix (PM) vorgegebenen Prognose-Applikationen (PA1 bis PA4) im Hintergrund in eine Arbeitsspeichereinheit der Applikations-Verarbeitungseinheit (1) geladen werden.

17. Verfahren nach einem der Patentansprüche 12 bis 16,
**dadurch gekennzeichnet, dass** die Applikationen Anwendungsprogramme und/oder Dienstanwendungen darstellen.

18. Verfahren nach einem der Patentansprüche 12 bis 17,
**dadurch gekennzeichnet, dass** in Schritt a) eine Häufigkeit, eine Zeitdauer, ein Zeitpunkt und/oder ein Kontext für einen Applikationsstart erfasst wird.

19. Verfahren nach einem der Patentansprüche 12 bis 18,
**gekennzeichnet durch** den weiteren Schritt d) Freigeben von bereits geladenen oder teilgeladenen Prognose-Applikationen (PA1 bis PA4) zum Freimachen von Ressourcen, wenn eine bereist gestartete zugehörige Aktiv-Applikation (AA0) abgebrochen wird.

20. Verfahren nach einem der Patentansprüche 12 bis 19,
**dadurch gekennzeichnet, dass** die Preloading-Matrix (PM) eine Prioritätsliste (PL) für die Reihenfolge der zu ladenden Prognose-Applikationen (PA1 bis PA4) aufweist.

21. Verfahren nach einem der Patentansprüche 12 bis 20,
**dadurch gekennzeichnet, dass** in Schritt d) die Ladevorschrift der Preloading-Matrix (PM) durch ein gewichtetes Analyseergebnis erzeugt oder aktualisiert wird.

22. Verfahren nach einem der Patentansprüche 13 bis 21,
**dadurch gekennzeichnet, dass** das Benutzerprofil (5) und/oder die Preloading-Matrix (PM) unmittelbar in Abhängigkeit von einem Benutzer erzeugt oder aktualisiert, ganz oder teilweise gelöscht, und/oder initialisiert wird.
